(19)

Europäisches Patentamt
European Patent Office
Office européen des brevets

(11)     **EP 2 848 927 B1**

(12)     **EUROPEAN PATENT SPECIFICATION**

(45) Date of publication and mention
of the grant of the patent:
**09.09.2015   Bulletin 2015/37**

(51) Int Cl.:
***G01N 27/12*** (2006.01)

(21) Application number: **13184470.6**

(22) Date of filing: **14.09.2013**

(54) **Sensing layers for oxygen detection**

Sensing Schicht für Sauerstoff

Couche de détection pour le gaz d'oxygène

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.03.2015   Bulletin 2015/12**

(73) Proprietor: **Honeywell Romania S.R.L.
014459 Bucharest (RO)**

(72) Inventors:
- **Serban, Bogdan-Catalin
  60000 Bucharest (RO)**
- **Cobianu, Cornel P.
  061672 Bucharest (RO)**
- **Brezeanu, Mihai
  014459 Bucharest (RO)**
- **Avramescu, VIOREL
  030342 Bucharest (RO)**
- **Buiu, Octavian
  023817 Bucharest (RO)**
- **Dumitru, Viorel Georgel
  100077 Prahova (RO)**
- **Mihaila, Mihai N.
  023555 Bucharest (RO)**
- **Bostan, Cazimir G.
  061724 Bucharest (RO)**

(74) Representative: **Houghton, Mark Phillip
Patent Outsourcing Limited
1 King Street
Bakewell, Derbyshire DE45 1DZ (GB)**

(56) References cited:
**WO-A1-2013/040190     US-A1- 2005 157 445
US-A1- 2006 131 679     US-A1- 2008 093 226**

US-A1- 2011 120 866     US-A1- 2011 227 061

- WANG XUEJING ET AL: "Carbon nanotubes-In2O3 nanocomposites prepared by sol-gel method and its gas sensitive properties", GUISUANYAN XUEBAO - JOURNAL OF THE CHINESE CERAMIC SOCIETY, ZHONGGUO JIANZHU GONGYE CHUBANSHE, BEIJING, CN, vol. 40, no. 3, March 2012 (2012-03), pages 391-395, XP008165432, ISSN: 0454-5648
- JESSIE DARMA ET AL: "Synthesis of CNT-SnO$_2$ and CNT-In$_2$O$_3$ films for micro sensor application using vacuum microelectronics technology", 2008 23RD INTERNATIONAL SYMPOSIUM ON DISCHARGES AND ELECTRICAL INSULATION IN VACUUM, September 2008 (2008-09), pages 607-610, XP055084409, DOI: 10.1109/DEIV.2008.4676867 ISBN: 978-9-73-755382-9
- HONGZHONG LIU ET AL: "Synthesis and gas sensing characteristic based on metal oxide modification multi wall carbon nanotube composites", APPLIED SURFACE SCIENCE, vol. 258, no. 6, May 2011 (2011-05), pages 1991-1994, XP028356650, ISSN: 0169-4332, DOI: 10.1016/J.APSUSC.2011.05.081 [retrieved on 2011-05-26]
- WISITSORAAT A ET AL: "Carbon Nanotube-SnO2 Composite Gas Sensor Prepared by Electron beam Evaporation", NANO/MICRO ENGINEERED AND MOLECULAR SYSTEMS, 2006. NEMS '06. 1ST IEEE INTERNATIONAL CONFERENCE ON, IEEE, PI, January 2006 (2006-01), pages 1487-1490, XP031064120, DOI: 10.1109/NEMS.2006.334813 ISBN: 978-1-4244-0139-0

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

EP 2 848 927 B1

- ESPINOSA ET AL: "Hybrid metal oxide and multiwall carbon nanotube films for low temperature gas sensing", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 127, no. 1, 5 October 2007 (2007-10-05), pages 137-142, XP022286091, ISSN: 0925-4005, DOI: 10.1016/J.SNB.2007.07.108

## Description

### BACKGROUND

Oxygen detection via oxygen sensors has been widely applied in aerospace, domestic and industrial boilers, and automotive exhaust gas control systems. However, some known oxygen sensors are limited by te the temperature that they can be used at.

US2006/0131679 discloses a Nano Rod array fabricated on top of a conductive layer using substantially vertically aligned nano rods. US2011/0120866 discloses an environmental gas sensor comprising nano fibres arranged perpendicular to each other on metal electrodes. US2005/0157555 discloses nano particles composed of metal oxides having semiconductor properties. WANG XUEJING ET AL: discloses "Carbon nanotubes-In2O3 nanocomposites prepared by sol-gel method and its gas sensitive properties", Journal of the Chinese ceramic Society, March 2012, (2012-03-01).

### SUMMARY

The present invention in its various aspects is as set out in the appended claims. The present disclosure is directed toward oxygen sensing structure that can be used for oxygen detection. The oxygen sensing structure of the present disclose can include a nanocomposite sensing layer including carbon nanotubes and a plurality of metal-oxide particles. The oxygen sensing structures of the present disclosure can have high reliability and a good response time throughout a wide range of temperatures. For example, the oxygen sensing layers can be used at temperatures ranging from room temperature to high temperatures (e.g., 27°C to 600°C).

### DETAILED DESCRIPTION OF THE DRAWINGS

The embodiments of the present disclosure will be described, by way of example only, by reference to the FIGS. 1- 4 of the accompanying drawings in which:

FIG. 1 shows a cross-sectional view of an oxygen sensing structure.

FIG. 2 shows a cross-sectional view of an oxygen sensing structure, in accordance with at least one embodiment of the present invention.

FIG. 3 shows a flow diagram for a method of forming an oxygen sensing structure.

FIG. 4 shows a flow diagram for a method, in accordance with at least one embodiment of the present invention.

## DETAILED DESCRIPTION

As discussed herein, the present disclosure is directed to an oxygen sensing structure (also referred to herein as "sensing structure") for oxygen detection and methods for making the sensing structures. The sensing structures of the present disclosure can include a substrate and a nanocomposite sensing layer (also referred herein as a "sensing layer"). The nanocomposite sensing layer can have an increased measured conductivity variation in the presence of oxygen and be used for oxygen detection in a wide range of temperatures, while maintaining the response time and sensing accuracy of previous oxygen detectors.

In previous approaches, oxygen sensing layers for chemoresistive detection were prepared from metal oxide ball-mixed powders which were mixed in the appropriate stoichiometry and then calcined in air at high temperatures (e.g., 1200°C). In order to obtain enhanced nanostructuring of these mixed compositions, sintering temperatures as high as 1500°C were used. The previous approaches can utilize high thermal budget and high energy consumption for preparing oxygen sensing layers.

The sensing structures of the present disclosure are based on a novel nanocomposite sensing layer synthesized from solution by sol-gel like technologies. The nanocomposite sensing layer can provide enhanced detection capabilities even if obtained at much lower temperatures.

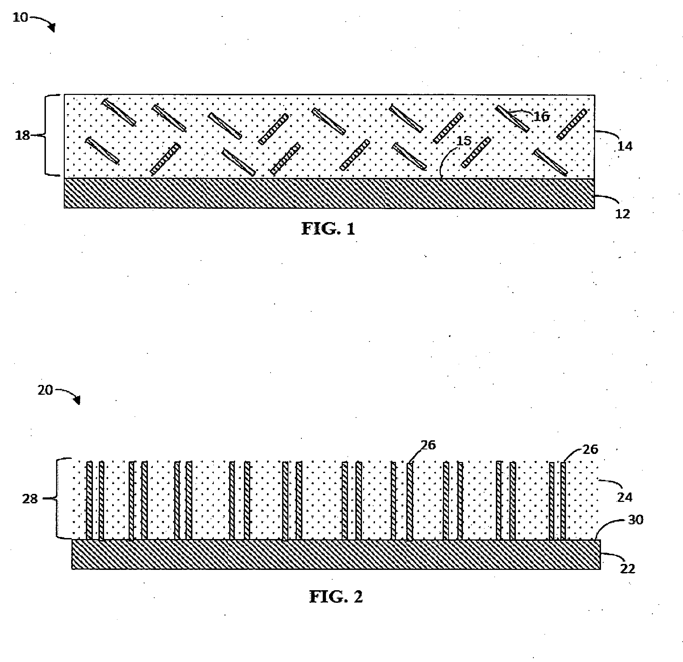

FIG. 1 shows a cross-sectional view of a sensing structure 10, which is not in accordance with the present invention. The sensing structure 10 can include a substrate 12 and a nanocomposite sensing layer 18 positioned on a top surface 15 of the substrate 12. The nanocomposite sensing layer 18 can include a carbon nanostructure 16 and a plurality of metal-oxide particles 14. FIG. 1 illustrates an example of oxygen sensing structure 10 where the carbon nanostructure 16 is incorporated into the plurality of metal-oxide particles 14. In order to obtain a chemoresistive oxygen sensor, two metal electrodes (not shown) can be deposited on the nanocomposite sensing layer 18, and the electric current should flow between these electrodes via the nanocomposite sensing layer 18.

The substrate 12 can be chosen from at least one of a silicon/silicon dioxide substrate, a silicon/silicon oxynitride substrate, a silicon dioxide/silicon oxynitride substrate and ceramic substrates such as alumina and zirconia. The silicon/silicon dioxide substrate is used herein to mean that a silicon dioxide layer is thermally grown or deposited on a silicon substrate. The silicon/silicon oxynitride substrate is used herein to mean that a silicon oxynitride layer is thermally grown or deposited on a silicon substrate. The substrate 12 can have a thickness within a range of about 5 micrometers ($\mu$m) to about 1 millimeter (mm).

As discussed herein, the nanocomposite sensing layer 18 can include the carbon nanostructure 16 and the plurality of metal-oxide particles 14. The nanocomposite sensing layer 18 can have a thickness within a range of about 0.1 μm to about 30 μm.

In an example, the carbon nanostructure 16 can be chosen from at least one of carbon nanotubes, graphene, fullerene $C_{60}$, fullerene $C_{70}$, nanobuds, and carbon nanofibers. FIG. 1 illustrates an example where the oxygen sensing structure 10 includes carbon nanotubes as the carbon nanostructure 16. The carbon nanotubes can be a single-wall carbon nanotube, a double-wall carbon nanotube, a multi-wall carbon nanotube, and combinations thereof. The carbon nanotubes can have a height from 0.01 μm to at least 10 μm.

In an example, the plurality of metal-oxide particles 14 are chosen from at least one of strontium titanate and strontium titanate ferrate. Strontium titanate and strontium titanate ferrate are p-type metal-oxide semiconductor materials and indium (III) oxide is an n-type metal-oxide semiconductor materials. In an example, for p-type oxygen sensing, the plurality of metal-oxide particles 14 can be chosen from at least one of strontium titanate and strontium titanate ferrate. The plurality of metal-oxide particles 14 can include nanowires, nanorods, nanobelts, nanowires and nanotubes.

In an example, the plurality of metal-oxide particles 14 include at least one of strontium titanate and strontium titanate ferrate. Strontium titanate and strontium titanate ferrate both have p-type semiconducting behavior in atmospheres where the oxygen partial pressure increases above a value (e.g., $10^{-5}$ bar). As the oxygen partial pressure increases, more holes (h) can be generated, by oxygen atom incorporation in the positively charged oxygen vacancies (Vo) of strontium titanate and strontium titanate ferrate as per the chemical reaction:

$$\tfrac{1}{2}\, O^2 + V_0 = O_x + 2h$$

or by oxygen attaching to the carbon nanostructures 16 (e.g., carbon nanotubes) from the strontium titanate or the strontium titanate ferrate, which can increase the electrical conductivity.

The conductivity of graphene is affected by the presence of oxygen atom on its surface. Similarly, the conductivity of the polycrystalline of fullerenes (e.g., fullerene 60 and fullerene 70) can be significantly affected by changes in oxygen concentration. That is, the conductivity decreases when the oxygen increases. Thus, incorporating the graphene and fullerenes can increase the sensitivity to oxygen. Nanobuds are a hybrid material that combines two types of carbon: carbon nanotubes and fullerenes. The conductivity of the nanobuds can change when exposed to oxygen.

FIG. 2 shows a cross-sectional view of an oxygen sensing structure 20, in accordance with at least one embodiment of the present invention. The oxygen sensing structure 20 includes a substrate 22 and a nanocomposite sensing layer 28 positioned on a top surface 30 of the substrate 22. The nanocomposite sensing layer 28 includes a carbon nanostructure 26 and a plurality of metal-oxide particles 24. The example illustrated in FIG. 2 is similar to the example in FIG. 1, except that the carbon nanostructure extends from a surface 30 of the substrate 22.

The substrate 22 can be chosen from at least one of the silicon/silicon dioxide substrate, the silicon/silicon oxynitride substrate, the silicon dioxide/silicon nitride substrate, the silicon dioxide/ silicon oxynitride substrate, and ceramic substrates such as alumina and zirconia. The substrate can have a thickness of within a range of about 5 μm to about 1 mm.

In the example illustrated in FIG. 2, the carbon nanostructure 26 includes a plurality of carbon nanotubes. In an example, the plurality of metal oxide particles 24 can be chosen from at least one of strontium titanate, strontium titanate ferrate for the case of oxygen sensing with a p-type metal oxide semiconductor. The plurality of metal-oxide particles can include, nanobelts, nanorods, nanowires and nanotubes.

As discussed herein, the oxygen sensing structures 10, 20 of the present disclosure can provide oxygen detection in a wide range of temperatures. For example, the oxygen sensing structures 10, 20 can be used for oxygen detection within a temperature range of about 27 °C to about 600 °C.

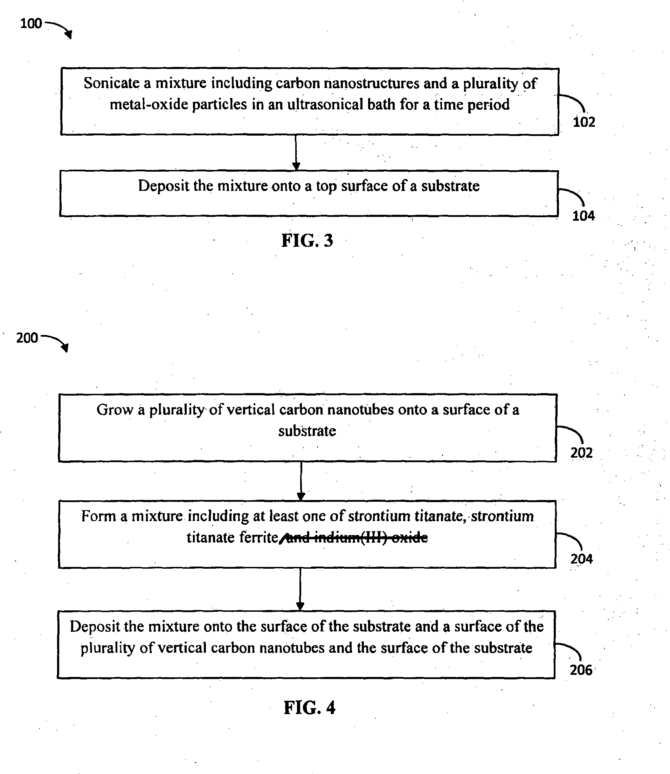

FIG. 3 shows a flow diagram of a method 100 of forming an oxygen sensing structure, which is not in accordance with the present invention. For example, method 100 can be used to form oxygen sensing structure 10 in FIG. 1. At step 102, method 100 can include sonicating a mixture including carbon nanostructures (e.g. 5 - 10 % w/w carbon nanotube) and a plurality of p type metal-oxide particles (90-95 % w/w) in an ultrasonical bath for a time period between 6 to 48 hours. In an example, the time period can be about 24 hours. Sonication includes applying sound energy to agitate the particles in a mixture. In an example, ultrasonic frequencies within a range of about 24KHz to about 26 KHz can be applied for the time period. Depending on the ultrasonic power intensity, during sonication, due to the cavitation process, gas bubbles are formed in the liquid solution and the pressure inside the bubbles can reach 1000 bars, while temperatures higher than 1000°C can be locally developed when bubble implosion occurs. Such specific local conditions can explain the efficiency of the sonication process for the physico-chemical processes to be developed in the process bath (e.g. separation of components in a solution, dissolution, diffusion, reaction, nanostructuring, depending on the ultrasonic radiation intensity). Sonication of the carbon nanostructures and the plurality of metal-oxide particles can determine a homogeneous distribution of the carbon nanotubes in the solution containing the plurlatiy of metal-oxide particles.

At step 104, method 100 can include depositing the mixture onto a top surface of a substrate. While a number of techniques can be used to deposit nanoparticles onto a substrate, in one example, the mixture is deposited using a drop-casting process. Drop-casting can include spreading the mixture over the substrate and allowing the mixture to dry under controlled conditions (e.g., pressure and temperature). A film thickness can depend on the volume of the dispersion used and the particle concentration. Other techniques for depositing the mixture onto the substrate can include spin-coating, dip-coating, spray-coating, and others.

As discussed herein, the carbon nanostructure can be chosen from at least one of carbon nanotubes, fullerene $C_{60}$, fullerene $C_{70}$, nanobuds, graphene, and carbon nanofibers and the plurality of metal-oxide particles can be chosen from at least one of strontium titanate, strontium titanate ferrate, and indium (III) oxide. For example, the plurality of metal-oxide particles can be chosen from at least one of strontium titanate and strontium titanate ferrate for oxygen sensing based on nanocomposites containing p-type metal oxide semiconductor particles and indium (III) oxide for oxygen sensing based on nanocomposites containing n-type metal oxide semiconductor particles.

In an example, the plurality of metal-oxide particles is at least one of strontium titanate and strontium titanate ferrate, sonicating the mixture at step 102 includes sonicating the mixture including carbon nanostructures (e.g. 5% w/w carbon nanostructures), the plurality of metal-oxide particles (e.g. 40% w/w), terpineol (e.g. 40% w/w), lauric acid (e.g. 10% w/w) and ethylcellulose (e.g., 5 % w/w).

In an example, the plurality of metal-oxide particles includes indium (III) oxide. In that instance, the method 100, prior to sonicating the mixture, can include forming a first solution of the plurality of metal-oxide particles (e.g. 20% w/w) and isopropyl alcohol (e.g. 80% w/w) and sonicating the first solution for a time period. In an example, the time period can be 24 hours. The method 100 can include forming a second solution of the carbon nanostructure (e.g. 5% w/w) and chloroform (95% w/w) and sonicating the second solution for a time period. In an example, the time period can be 24 hours. The method can include combining the first solution and the second solution, after sonication, to form the mixture.

FIG. 4 shows a flow diagram of a method 200 of forming an oxygen sensing layer, in accordance with at least one embodiment of the present invention. For example, method 200 can be used to form sensing structure 20 in FIG. 2. At step 202, method 200 includes growing a plurality of vertical carbon nanotubes onto a surface of a substrate. In an example, growing the plurality of vertical carbon nanotubes can be done via chemical vapor deposition. For example, the vertical carbon nanotubes are nucleating selectively on metal catalysts dots (Ni, Fe) initially deposited on the substrate, and they grow in the vertical position thanks to this thermo-chemically activated process.

At step 204, method 200 includes forming a mixture including at least one of strontium titanate and strontium titanate ferrate. In an example, the mixture can include strontium titanate (10% w/w) strontium titanate ferrate (20% w/w), terpineol (50% w/w), lauric acid (10 % w/w) and ethyl-cellulose (10 % w/w). (At step 206, method 200 includes depositing the mixture onto the surface of the substrate and a surface of the plurality of vertical carbon nanotubes. As discussed herein, the mixture can be deposited via drop casting, but other methods can be used as well.

**Claims**

1. An oxygen sensing structure, comprising:

   a substrate (22) having a top surface (30); and
   a nanocomposite sensing layer positioned on the top surface (30), the nanocomposite layer including:

      a plurality of carbon nanotubes (26) extending vertically from the top surface of the substrate (22); and
      a plurality of metal-oxide particles (24) including at least one of strontium titanate and strontium titanate ferrate.

2. The oxygen sensing structure of claim 1, wherein the plurality of carbon nanotubes (26) include at least one of a single-wall carbon nanotube, a double-wall carbon nanotube, and a multi-wall carbon nanotube.

3. The oxygen sensing structure of claim 1, wherein the plurality of carbon nanotubes (26) have a p-type semiconducting behavior.

4. The oxygen sensing structure of any one of claims 1 to 3, wherein the plurality of metal oxide particles (24) include at least one of nanobelts, nanowires, nanorods, and nanotubes.

5. The oxygen sensing structure of any one of claims 1 to 4, wherein the plurality of metal oxide particles (24) contacts the top surface of the substrate (22) and a portion of the carbon nanostructure (26).

6. The oxygen sensing structure of any one of claims 1 to 5, wherein the substrate (22) is chosen from at least one of a silicon/silicon dioxide substrate, a silicon/oxynitride substrate, a silicon dioxide/silicon nitride substrate, a silicon dioxide/silicon oxynitride, an alumina substrate, and a zirconia substrate.

7. A method (200) of forming an oxygen sensing structure, the method comprising:

growing (202) a plurality of vertical carbon nanotubes (26) on a top surface of a substrate (22);

forming (204) a mixture including at least one of strontium titanate and strontium titanate ferrate; and

depositing (206) the mixture onto the surface of the substrate (22) and a surface of the vertical carbon nanostructures (26).

8. A method according to claim 7, wherein the mixture is deposited via drop casting.

## Patentansprüche

1. Sauerstoffsensorstruktur, umfassend:

ein Substrat (22) mit einer oberen Oberfläche (30); und

eine auf der oberen Oberfläche (30) angeordnete Nanokomposit-Sensorstruktur, wobei die Nanokompositschicht umfasst:

eine Vielzahl von Kohlenstoff-Nanoröhrchen (26), die senkrecht von der oberen Oberfläche des Substrats (22) vorragen; und

eine Vielzahl von Metalloxidpartikeln (24), einschließlich wenigstens einem von Strontiumtitanat und Strontiumtitanatferrat.

2. Sauerstoffsensorstruktur gemäß Anspruch 1, wobei die Vielzahl von Kohlenstoff-Nanoröhrchen (26) wenigstens eines von einem einwandigen Kohlenstoff-Nanoröhrchen, einem doppelwandigen Kohlenstoff-Nanoröhrchen und einem mehrwandigen Kohlenstoff-Nanoröhrchen umfasst.

3. Sauerstoffsensorstruktur gemäß Anspruch 1, wobei die Vielzahl von Kohlenstoff-Nanoröhrchen (26) ein p-Typ-Halbleiterverhalten aufweist.

4. Sauerstoffsensorstruktur gemäß einem der Ansprüche 1 bis 3, wobei die Vielzahl von Metalloxidpartikeln (24) wenigstens eines von Nanobändern, Nanodrähten, Nanostäben und Nanoröhrchen umfasst.

5. Sauerstoffsensorstruktur gemäß einem der Ansprüche 1 bis 4, wobei die Vielzahl von Metalloxidpartikeln (24) mit der oberen Oberfläche des Substrats (22) und einem Teil der Kohlenstoff-Nanostruktur (26) in Kontakt steht.

6. Sauerstoffsensorstruktur gemäß einem der Ansprüche 1 bis 5, wobei das Substrat (22) ausgewählt ist aus wenigstens einem von einem Silicium/Siliciumdioxid-Substrat, einem Silicium/Oxynitrid-Substrat, einem Siliciumdioxid/Siliciumnitrid-Substrat, einem Siliciumdioxid/Siliciumoxynitrid-Substrat, einem Aluminiumoxid-Substrat und einem Zirkonoxid-Substrat.

7. Verfahren (200) zum Herstellen einer Sauerstoffsensorstruktur, wobei das Verfahren umfasst:

Wachsenlassen (202) einer Vielzahl von senkrechten Kohlenstoff-Nanoröhrchen (26) auf einer oberen Oberfläche eines Substrats (22); Herstellen (204) eines Gemischs, das wenigstens eines von Strontiumtitanat und Strontiumtitanatferrat enthält; und

Abscheiden (206) des Gemischs auf die Oberfläche des Substrats (22) und eine Oberfläche der senkrechten Kohlenstoff-Nanostrukturen (26).

8. Verfahren gemäß Anspruch 7, wobei das Gemisch über Tropfgießen abgeschieden wird.

## Revendications

1. Structure de détection d'oxygène, comprenant :

un substrat (22) ayant une surface supérieure (30) ; et

une couche de détection nanocomposite positionnée sur la surface supérieure (30), la couche nanocomposite comportant :

une pluralité de nanotubes de carbone (26) s'étendant verticalement depuis la surface supérieure du substrat (22) ; et

une pluralité de particules d'oxyde métallique (24) comportant du titanate de strontium et/ou du titanoferrate de strontium.

2. Structure de détection d'oxygène selon la revendication 1, dans laquelle la pluralité de nanotubes de carbone (26) comporte un nanotube de carbone monoparoi, et/ou un nanotube de carbone à double paroi, et/ou un nanotube de carbone à parois multiples.

3. Structure de détection d'oxygène selon la revendication 1, dans laquelle la pluralité de nanotubes de carbone (26) a un comportement semi-conducteur de type p.

4. Structure de détection d'oxygène selon l'une quelconque des revendications 1 à 3, dans laquelle la pluralité de particules d'oxyde métallique (24) comporte des nanocourroies, et/ou des nanofils, et/ou des nanotiges, et/ou des nanotubes.

5. Structure de détection d'oxygène selon l'une quelconque des revendications 1 à 4, dans laquelle la pluralité de particules d'oxyde métallique (24) est en contact avec la surface supérieure du substrat (22) et une partie de la nanostructure de carbone (26).

6. Structure de détection d'oxygène selon l'une quelconque des revendications 1 à 5, dans laquelle le substrat (22) est choisi comme au moins un substrat parmi un substrat de silicium/dioxyde de silicium, un substrat de silicium/oxynitrure, un substrat de dioxyde de silicium/nitrure de silicium, un substrat de dioxyde de silicium/oxynitrure de silicium, un substrat d'alumine, et un substrat de zircone.

7. Procédé (200) de formation d'une structure de détection d'oxygène, le procédé comprenant :

> la croissance (202) d'une pluralité de nanotubes de carbone verticaux (26) sur une surface supérieure d'un substrat (22) ;
> la formation (104) d'un mélange comportant du titanate de strontium et/ou du titanoferrate de strontium ; et
> le dépôt (206) du mélange sur la surface du substrat (22) et une surface des nanostructures de carbone verticales (26).

8. Procédé selon la revendication 7, dans lequel le mélange est déposé par coulée en chute.

10 —↘

18 —{

16

1S

14

12

**FIG. 1**

20 —↘

26

26

28 —{

24

30

22

**FIG. 2**

100 ⟍

Sonicate a mixture including carbon nanostructures and a plurality of
metal-oxide particles in an ultrasonical bath for a time period
102

Deposit the mixture onto a top surface of a substrate
104

**FIG. 3**

200 ⟍

Grow a plurality of vertical carbon nanotubes onto a surface of a
substrate
202

Form a mixture including at least one of strontium titanate, strontium
titanate ferrite, and indium(III) oxide
204

Deposit the mixture onto the surface of the substrate and a surface of the
plurality of vertical carbon nanotubes and the surface of the substrate
206

**FIG. 4**

**EP 2 848 927 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060131679 A
- US 20110120866 A
- US 20050157555 A

**Non-patent literature cited in the description**

- **WANG XUEJING et al.** Carbon nanotubes-In2O3 nanocomposites prepared by sol-gel method and its gas sensitive properties. *Journal of the Chinese ceramic Society,* 01 March 2012